(19) Europäisches Patentamt

European Patent Office

Office européen des brevets

(11) **EP 0 903 898 B1**

(12) **EUROPEAN PATENT SPECIFICATION**

(45) Date of publication and mention
of the grant of the patent:
**15.02.2006 Bulletin 2006/07**

(51) Int Cl.:
*H04L 27/26* (2006.01)    *H04L 25/03* (2006.01)

(21) Application number: **98306337.1**

(22) Date of filing: **07.08.1998**

(54) **Equalizing method and equalizer for OFDM receiver**

Verfahren und Vorrichtung zum Entzerren für einen OFDM-Empfänger

Procedé et dispositif d'égalisation pour un récepteur OFDM

(84) Designated Contracting States:
**DE FR GB**

(30) Priority: **20.08.1997   KR 9739660**

(43) Date of publication of application:
**24.03.1999   Bulletin 1999/12**

(73) Proprietor: **SAMSUNG ELECTRONICS CO., LTD.**
**Suwon-City, Kyungki-do (KR)**

(72) Inventor: **Ahn, Won-ick**
**Kangnam-gu,**
**Seoul (KR)**

(74) Representative: **Robinson, Ian Michael**
**Appleyard Lees,**
**15 Clare Road**
**Halifax HX1 2HY (GB)**

(56) References cited:
**EP-A- 0 762 702          FR-A- 2 743 967**

**Description**

The present invention relates in general to the field of equalizing, and more particularly to an equalizer and an equalizing method for compensating for channel distortion in a receiver for receiving a signal transmitted using orthogonal frequency division multiplexing (OFDM).

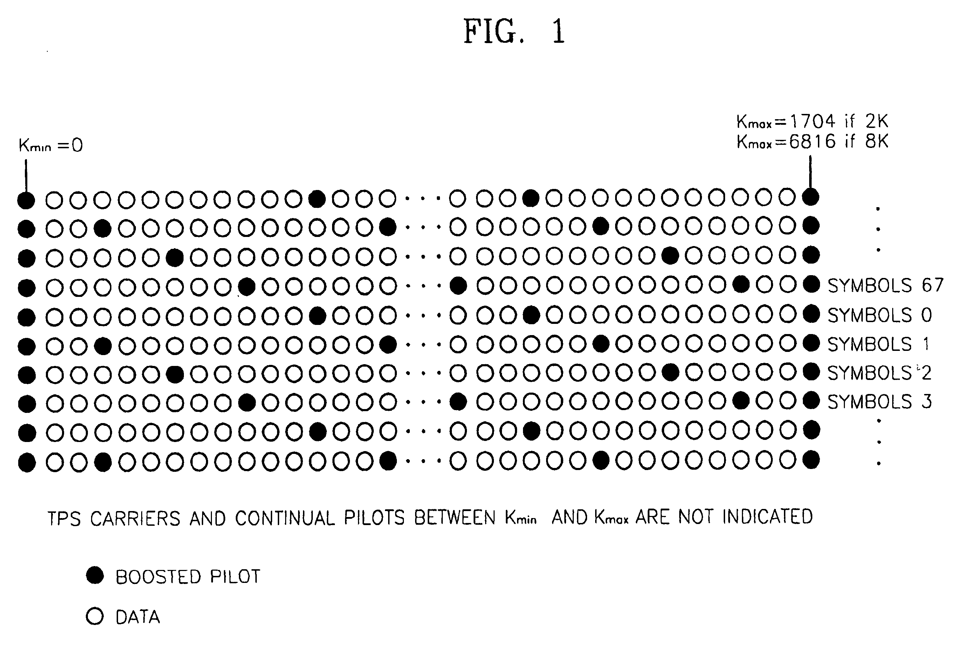

OFDM is a type of multiple carrier modulation method for transmitting a digital signal. In the OFDM method, data is carried by a plurality of sub-carriers and transmitted in parallel during a long symbol period, within a frequency band of the same width as that used for transmitting single carrier data. Since a symbol is determined in a frequency domain in the OFDM method, an equalizer used in the frequency domain is required for compensating for channel distortion of the received symbol. For this, scattered pilots are transmitted in the OFDM method. However, the scattered pilots are not transmitted through fixed sub channels, but are transmitted through different sub channels in every symbol, having a predetermined pattern, as shown in Figure 1.

Namely, as shown in Figure 1, the scattered pilots are repeated using four symbols as one period. Since the scattered pilots are transmitted through the first and final sub channels in a 12 sub channel period, making a second starting point of every symbol different, the characteristics of all the entire sub channels are estimated by finding out positions to which the scattered pilots are transmitted, calculating estimated values according to the characteristics of all the sub channel, and obtaining the characteristics of the data sub channels between the scattered pilots by interpolating the estimated values of adjacent pilots. However, in the case of performing interpolating in every symbol, since the distance between the scattered pilots becomes 11 sub channels, a compensation error becomes larger when frequency distortion is generated. Also, when channel characteristics are traced in every symbol, a precise filter is required as an interpolating filter since there are 11 sub channels between the scattered pilots.

However, the detailed structure of an equalizer for compensating for the channel distortion is not described in "European Telecommunication Standard" Draft ETS 300 744, March 1997 provided by European Telecommunication Standards Institute (ETSI).

An aim of at least preferred embodiments of the present invention is to provide an equalizing method for reducing the amount of calculation by reducing the distance between received scattered pilots and estimating channel characteristics.

Another preferred aim of the present invention is to provide an equalizer of a simple structure in an OFDM receiver.

Still another preferred aim of the present invention is to provide an equalizer for quickly compensating for the amplitude distortion and the phase delay of a channel in an OFDM receiver.

According to the present invention there is provided an equalizing method as set forth in claim 1 appended hereto. Also according to the present invention there is provided an equalizer as set forth in claim 8 or claim 15 appended hereto. Preferred features of the invention will be apparent from the dependent claims and the description which follows.

In a first aspect of the present invention there is provided an equalizing method for compensating for channel distortion of a plurality of carriers transmitted through a plurality of sub channels using scattered pilots having a period of a first predetermined number of symbols, comprising the steps of (a) extracting scattered pilots in units of the first predetermined symbol period from a plurality of received carriers, adding a channel characteristic value of each sub channel in the extracted scattered pilot position in the first predetermined number of symbols, and obtaining channel characteristic values in scattered pilot position having a period of a second predetermined number, (b) estimating the characteristics of a sub channel through which data between scattered pilots is transmitted using the channel characteristic values in the scattered pilot position having the period of the adjacent second predetermined number to obtain all sub channel characteristic values, and (c) compensating for channel distortion of the received plurality of carriers on the basis of all the sub channel characteristic values.

In a second aspect of the invention there is provided an equalizer for compensating for channel distortion of a plurality of carriers transmitted through a plurality of received sub channels using a scattered pilot having a period of a first predetermined number of symbols, comprising an estimating unit for extracting scattered pilots from the plurality of received carriers in units of the first predetermined number of symbols to estimate channel characteristic values in the extracted scattered pilot position, a calculating unit for obtaining channel characteristic values in the position of the scattered pilot of a period of a second predetermined number of sub channels by adding the channel characteristic values of each sub channel each other in units of the first predetermined number of symbols and for providing all the sub channel characteristic values by calculating the sub channel characteristics of the data between the scattered pilots using the channel characteristic values in the scattered pilot position of the period of the second predetermined number of sub channels, and a compensating unit for compensating for channel distortion of the plurality of received carriers using all the estimated sub channel characteristic values.

For a better understanding of the invention, and to show how embodiments of the same may be carried into effect, reference will now be made, by way of example, to the accompanying diagrammatic drawings, in which:

Figure 1 shows an example of the conventional distribution of scattered pilots;

Figure 2 shows an example of the modified distribution of scattered pilots provided in the present invention;

Figure 3 shows an example of the operation of an equalizer; and

Figure 4 is a detailed block diagram of an equalizer for an OFDM receiver according to an embodiment of the present invention.

As will be described below, the preferred embodiment of the present invention compensates for channel distortion by estimating the channel characteristics on the basis of a four symbol interval, assuming that the channel characteristics hardly change during the four symbol since the characteristics of the scattered pilot have a period of four symbols. Namely, since the time of the four symbol interval is about 4ms (in the case of an 8K mode), it is assumed that the channel characteristic gradually change during that time.

A preferred equalizing method will now be described as follows.

STEP 1: it is determined which symbol is received among the four symbols and a scattered pilot is extracted from the received symbol.

STEP 2: a channel characteristic value in the position of the extracted scattered pilot is estimated.

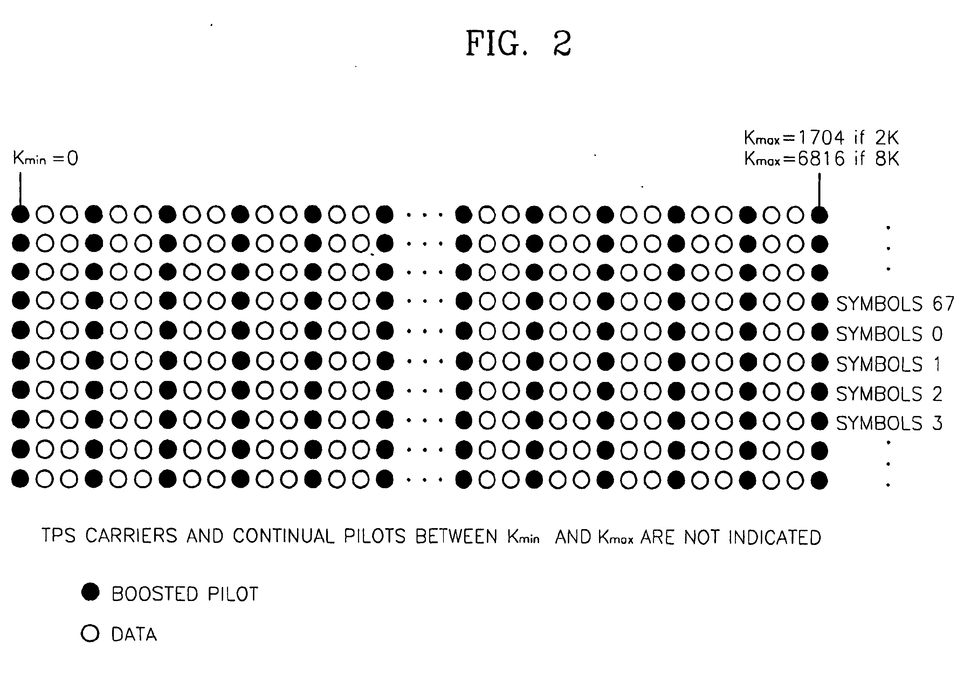

STEP 3: the scattered pilot exists for a period of three sub channels, when a channel characteristic value with respect to one symbol to be used during a four symbol interval is obtained by inserting an arithmetic zero "0" into all the data except for the scattered pilots in units of four symbols in which the channel characteristic value in the position of the scattered pilot is estimated and by adding the characteristic values in each sub channel to each other in unit of four symbols. Therefore, the distribution of the modified scattered pilot provided in the present invention is as shown in Figure 2.

STEP 4: the characteristics of two sub channels to which data between two adjacent scattered pilots is transmitted are estimated by interpolating the channel characteristic value of the position of the estimated scattered pilot.

Here, in a constant interpolation, the characteristics of three sub channels are calculated in the same manner, considering that the characteristics of a sub channels to which the scattered pilot is transmitted are the same as those of the sub channels to which the following two data are transmitted, when interpolation hardly changes the characteristics of the sub channel. In another method, the characteristics of the two sub channels to which data between the scattered pilots are transmitted are calculated by a linear interpolation. In still another method, a windowed finite impulse response (FIR) filter having a better interpolation performance is used.

STEP 5: Distortion in a channel is compensated for by multiplying the transmitted sub channel data by the inverse of the characteristic value of the sub channel. Here, the characteristics of the sub channels are the same over a four symbol unit. The characteristics of all the sub channels of one symbol, to which the channel characteristics in the respective scattered pilot positions of four symbols are considered, are applied to the four symbols, assuming that the channel characteristics do not change during the four symbol interval.

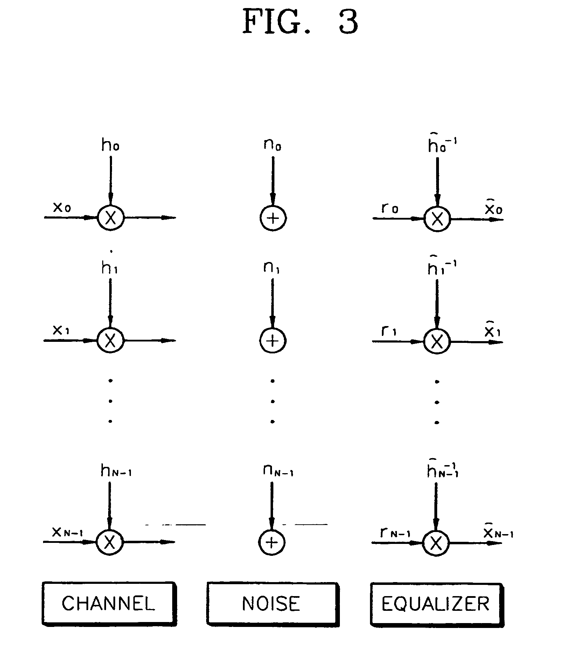

Figure 3 shows the operation of an equalizer in a time domain, to aid understanding of the present invention. In Figure 3, a plurality of carriers $x_0$, $x_1$, ..., $x_{N-1}$ are mixed with the respective sub channel characteristics $h_0$, $h_1$, ..., $h_{N-1}$ and are transmitted through a plurality of sub channels. The plurality of carriers transmitted through the plurality of sub channels, to which noise (the channel distortion) no, $n_1$, ..., $n_{N-1}$ is added, are input to the equalizer. In order to compensate for the channel distortion, the plurality of received carriers $r_0$, $r_1$, ..., $r_{N-1}$ are multiplied by the inverse characteristics

$$(\hat{h}_0^{-1}, \hat{h}_1^{-1}, \ldots, \hat{h}_{N-1}^{-1})$$ of the respective sub channels, to output the plurality of compensated carriers

$$(\hat{x}_0, \hat{x}_1, \ldots, \hat{x}_{N-1}) .$$

Since the equalizer compensates for frequency distortion in a symbol unit in a frequency domain, the following equation 1 is obtained when the characteristics of a channel, transmitted data, and received data are H(f), x(f), and R(f), respectively.

$$R_k(f) = H_k(f) \cdot X_k(f) \qquad \cdots \quad (1)$$

wherein, k represents the sub channel index.

The sub channel through which a pilot is transmitted can be represented as the following equation 2. The amplitude characteristics and the phase characteristics of the sub channel can be obtained from the equation 3.

$$R_k(f) = H_k(f) \cdot P_k(f) \quad \cdots \quad (2)$$

wherein P(f) represents a scattered pilot.

$$H_k(f) = \frac{R_k(f)}{P_k(f)} \quad \cdots \quad (3)$$

In the case of an 8K mode, the number of sub channels obtained from the scattered pilots of a modified distribution shown in Figure 2 is 6816/3. The characteristics of the 6816x2/3 data channel are obtained by an interpolation using the characteristics of the sub channels. The constant interpolation used in every symbol can be represented by the following equation 4.

$$H_{p(k)}(f) = H_{d(1)}(f) = H_{d(2)}(f) \quad \cdots \quad (4)$$

A linear interpolation used in every symbol will be described as follows. When the characteristic of a channel through which the scattered pilot is transmitted is $H_{P(k)}(f)$, the characteristic of a channel through which an adjacent next pilot is transmitted is $H_{P(k+1)}(f)$. When the characteristics of the sub channels through which data between the sub channels of the two scattered pilots are transmitted are $H_{d(1)}(f)$ and $H_{d(2)}(f)$, they can be obtained through the equations 5 and 6.

$$H_{d(1)}(f) = \frac{H_{P(k+1)}(f) - H_{P(k)}(f)}{.3} + H_{P(k)}(f) \quad \cdots \quad (5)$$

$$H_{d(2)}(f) = \frac{H_{P(k+1)}(f) - H_{P(k)}(f)}{3} \times 2 + H_{P(k)}(f) \quad \cdots \quad (6)$$

Other than the constant interpolation and the linear interpolation, an interpolation by a windowed FIR filter can be used. The windowed FIR filter is designed using a low pass filter whose sampling frequency is three times a carrier frequency. When the characteristics of the scattered pilot are filtered by the windowed FIR filter, the characteristics of the two sub channels between the scattered pilots are calculated and output. Namely, when the characteristics of the filter are F(f), the characteristics of all the channels are obtained by performing a convolution for the characteristics of the scattered pilot and those of the filter F(f). Namely; the characteristics of all the channels H(f) can be obtained as follows.

$$H(f) = H_p(f) \cdot F(f) \quad \cdots \quad (7)$$

The equalized output represented in the equation 8 is obtained by obtaining the characteristics of all the sub channels by the method shown in the equation 7 and multiplying the received data by the inverse of the characteristic value of the sub channel.

$$R_k(f) \cdot \frac{1}{H_k} = H_k(f) \cdot X_k(f) \cdot \frac{1}{H_k} = X_k(f) \qquad \cdots \quad (8)$$

Conveniently, it is not necessary to trace the position of the scattered pilot, since the position of the scattered pilot does not change. It can be estimated the characteristics of the channel by calculating values between the scattered pilots by constant interpolation or linear interpolation, since the distance between the scattered pilots becomes two sub channels. However, interpolation by the windowed FIR filter can be used in order to enhance the interpolation performance. After the characteristics of all the sub channels are estimated, the equalization in the frequency domain can be performed by multiplying the received signal by the inverse of the channel characteristic value. The equalization becomes very simple since it has the structure of equalizer having one tap filter. Therefore, estimating the channel characteristics in the four symbol interval unit is advantageous with respect to the structure of the equalizer or the amount of calculation, if the channel characteristics hardly change during the four symbol interval.

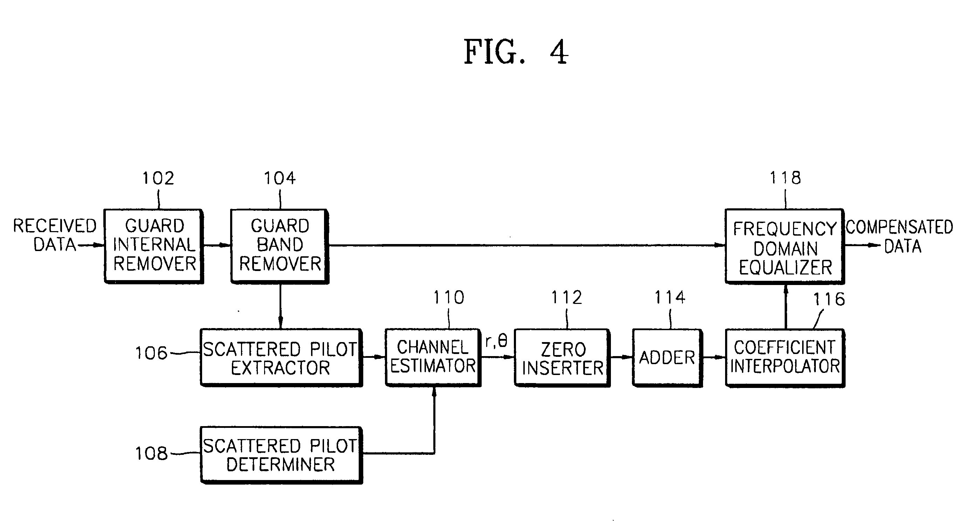

The equalizer for the OFDM receiver according to the present invention will be described with reference to Figure 4.

In Figure 4, a guard interval remover 102 removes a cyclic prefix (CP) corresponding to a guard interval from the received data. A guard band remover 104 performs a fast Fourier transform (FFT) on data output from the guard interval remover 102 and removes the guard band included in the fast Fourier transformed data in units of one symbol, in order to convert the data into data of a frequency domain since the data output from the guard interval remover 102 is data of a time domain. Here, in the case of an 8K mode, each symbol is formed of 6817 carriers. The symbols are transmitted over a duration of Ts. The duration Ts includes an effective symbol part interval for transmitting the 6817 carriers and a guard interval.

A scattered pilot extractor 106 extracts the scattered pilot from data from which the guard band is removed output from the guard band remover 104, namely, the 6817 carriers in every symbol in the case of an 8K mode. Since the scattered pilots have a boosted power level, the scattered pilot extractor 106 examines a correlation between the data from which the guard band has been removed and a reference sequence, and extracts the scattered pilot. Since the reference sequence is one symbol pattern data among four symbols, it is possible to find out which is the symbol received at present among the four symbols. Since the scattered pilot is repeated with a four symbol period, the position of the scattered pilot of the four symbols is automatically revealed by revealing the position of the scattered pilot of one symbol. Therefore, it is possible to correctly reveal the position of the scattered pilot of one symbol using the reference sequence by the scattered pilot extractor 106. With respect to the next three symbols, the received level value is output in the already revealed position of the scattered pilot.

Here, the boosted power level of the received scattered pilot is $(4/3)^2$. However, the scattered pilot according to the positions of the respective scattered pilots of the four symbol period during transmission has a coordinate value of (4/3,0) or (-4/3,0). Since this coordinate information is already revealed by a scattered pilot determiner 108, the coordinate value of the scattered pilot extracted from the scattered pilot extractor 106 is output to a channel estimator 110.

The channel estimator 110 outputs the channel characteristic value in the position of the scattered pilot by channel estimating using a coordinate value representing the position of the scattered pilot output from the scattered pilot determiner 108. Namely, the channel estimator 110 compares the boosted level of the scattered pilot extracted by the scattered pilot extractor 106 with the original coordinate value and outputs a value (r) for compensating for the amplitude distortion and a value (θ) for compensating for the phase distortion.

A zero inserter 112 inserts the channel characteristic value in the position of the scattered pilot estimated by the channel estimator 110 and "zero" into the positions of carriers other than the scattered pilot. The zero inserter 112 includes a buffer for storing carriers of the four symbols. Therefore, the output of the zero inserter 112 has the distribution of the scattered pilot as shown in Figure 2 and values in the scattered pilot positions are channel characteristic values.

An adder 114 adds the respective carriers output from the zero inserter 112 in units of four symbols and outputs the channel characteristic value of one symbol in the position of the pilot having a period of three sub channels. A coefficient interpolator 116 interpolates the channel characteristic value in the position of the pilot having the period of the three sub channels output from the channel estimator 110 using linear interpolation, constant interpolation, or windowed FIR filter interpolation and outputs the interpolated coefficients in order to estimate two sub channel characteristic value between the pilots. Here, a counter may be included in the coefficient interpolator 116 in order to output the interpolated coefficient showing the characteristics of all the sub channels of one symbol four times in order to apply the characteristics of all the sub channels of one symbol to the four symbols.

A frequency domain equalizer 118 can be a filter having one tap, namely, a multiplier. The frequency domain equalizer 118 outputs data compensated by multiplying the data output from the guard band remover 104 by the inverse of the coefficient estimated by the coefficient interpolator 116. Additionally, although not shown in the drawings, it is clear to a person skilled in the art that a buffer could be included for buffering the output of the guard band remover 104 during the estimation of the channel characteristics of the four symbols by the coefficient interpolator 116 for controlling timing.

In Figure 4, the scattered pilot extractor 106 can be called an estimating unit. The zero inserter 112, the adder 114, and the coefficient interpolator 116 can together be called a calculating unit. The frequency domain equalizer 118 can be called a compensating unit.

As described above, it is possible reduce the amount of calculation and to realize simple hardware, since the four symbols are equalized by the channel characteristics of one symbol using the channel characteristic value in the position of the scattered pilot having the period of three sub channels, thus it is not necessary to trace the position of the pilot in every symbol.

**Claims**

1. An equalizing method for compensating for channel distortion of a plurality of carriers transmitted through a plurality of sub channels using scattered pilots having a period of a first predetermined number of symbols, comprising the steps of:

   (a) extracting (106) scattered pilots in units of the first predetermined symbol period from a plurality of received carriers, adding a channel characteristic value of each sub channel in the extracted scattered pilot position in the first predetermined number of symbols, and obtaining channel characteristic values in scattered pilot positions having a period of a second predetermined number;
   (b) estimating (110) the characteristics of a sub channel through which data between scattered pilots is transmitted using the channel characteristic values in the scattered pilot position having the period of the adjacent second predetermined number to obtain all sub channel characteristic values; and
   (c) compensating (118) for channel distortion of the received plurality of carriers on the basis of all the sub channel characteristic values.

2. The method of claim 1, wherein the step (a) comprises the steps of:

   (a1) extracting scattered pilots from a plurality of received carriers in units of the first predetermined number of symbols;
   (a2) calculating each channel characteristic value in the scattered pilot position extracted using the coordinate values of the already revealed scattered pilots;
   (a3) replacing carriers other than the scattered pilots by predetermined pattern data; and
   (a4) adding the characteristic values of each sub channel to each other in each unit of the first predetermined number of symbols to obtain each channel characteristic value in the position of the scattered pilots having the period of a second predetermined number with respect to one symbol.

3. The method of claim 1 or 2, wherein all the sub channel characteristic values are applied to the plurality of carriers received during the symbol interval of the first predetermined number, in the step (c).

4. The method of claim 1, 2 or 3 wherein the channel characteristic values in the position of the scattered pilots having the period of the adjacent second predetermined number are interpolated by a predetermined interpolation and an interpolated coefficient is output, in order to estimate the characteristics of the sub channel through which data between the scattered pilots is transmitted, in the step (b).

5. The method of claim 4, wherein the channel distortion is compensated for by multiplying the carrier received during the symbol interval of the first predetermined number by the inverse of the interpolated coefficient.

6. The method of claim 4, wherein the interpolation is one among constant interpolation, linear interpolation, and windowed FIR filtering interpolation.

7. The method of any of claims 2 to 6, wherein the predetermined pattern data is arithmetic zeros.

8. An equalizer for compensating for channel distortion of a plurality of carriers transmitted through a plurality of received sub channels using a scattered pilot having a period of a first predetermined number of symbols, comprising:

   an estimating unit (106) for extracting scattered pilots from the plurality of received carriers in units of the first predetermined number of symbols to estimate channel characteristic values in the extracted scattered pilot position;

a calculating unit (112,114,116) for obtaining channel characteristic values in the position of the scattered pilot of a period of a second predetermined number of sub channels by adding the channel characteristic values of each sub channel to each other in units of the first predetermined number of symbols and for providing all the sub channel characteristic values by calculating the sub channel characteristics of the data between the scattered pilots using the channel characteristic values in the scattered pilot position of the period of the second predetermined number of sub channels; and

a compensating unit (118) for compensating for channel distortion of the plurality of received carriers using all the estimated sub channel characteristic values.

9. The equalizer of claim 8, wherein all the sub channel characteristic values of one symbol are applied to the plurality of carriers received during an interval of the first predetermined number of symbols, in the compensating unit (118).

10. The equalizer of claim 8 or 9, wherein the calculating unit interpolates the channel characteristic values in the position of the scattered pilot having the period of the adjacent second predetermined number of symbols and an interpolated coefficient is output, in order to calculate the characteristic of the sub channel through which data between the scattered pilots is transmitted.

11. The equalizer of claim 10, wherein the compensating unit (118) comprises a multiplier for multiplying the carrier received by the inverse of the interpolated coefficient.

12. The equalizer of claim 10, wherein the interpolation is one among constant interpolation, linear interpolation, and windowed FIR filter interpolation.

13. The equalizer of claim 12, wherein the windowed FIR filter is a low pass filter whose sampling frequency is the second predetermined number of times the carrier frequency.

14. The equalizer of claim 8, wherein the calculating unit (112,114) inserts an arithmetic "zero" into the carriers other than the scattered pilots having the estimated channel characteristic values and adds the characteristic values of each sub channel to each other in unit of the first predetermined number of symbols.

**Patentansprüche**

1. Entzerrungsverfahren zum Kompensieren von Kanalverzerrung einer Vielzahl von Trägern, die durch eine Vielzahl von Unterkanälen unter Verwendung von verstreuten Piloten mit einer Periode einer ersten vorgegebenen Anzahl von Symbolen übertragen werden, die folgenden Schritte umfassend:

(a) Extrahieren (106) verstreuter Pilote in Einheiten der ersten vorgegebenen Symbolperiode aus einer Vielzahl von empfangenen Trägern, Addieren eines Kanaleigenschaftswertes jedes Unterkanals an der Position des extrahierten verstreuten Piloten in der ersten vorgegebenen Anzahl von Symbolen und Erhalten von Kanaleigenschaftswerten an Positionen des verstreuten Pilots mit einer Periode einer zweiten vorgegebenen Anzahl,

(b) Schätzen (110) der Eigenschaften eines Unterkanals, durch den Daten zwischen verstreuten Piloten übertragen werden, unter Verwendung der Kanaleigenschaftswerte an den Positionen des verstreuten Pilots mit der Periode der anschließenden zweiten vorgegebenen Anzahl, um alle Unterkanaleigenschaftswerte zu erhalten,

(c) Kompensieren (118) der Kanalverzerrung der empfangenen Vielzahl von Trägern auf der Basis aller Unterkanaleigenschaftswerte.

2. Verfahren nach Anspruch 1, wobei der Schritt (a) die folgenden Schritte umfasst:

(a1) Extrahieren verstreuter Piloten aus einer Anzahl von empfangenen Trägern in Einheiten der ersten vorgegebenen Anzahl von Symbolen,

(a2) Berechnen jedes Kanaleigenschaftswertes an der Position des extrahierten verstreuten Pilots unter Verwendung der Koordinatenwerte der bereits aufgedeckten verstreuten Piloten,

(a3) Ersetzen der Träger, mit Ausnahme der verstreuten Piloten, durch vorgegebene Musterdaten und

(a4) Addieren der Eigenschaftswerte jedes Unterkanals in jeder Einheit der ersten vorgegebenen Anzahl von Symbolen miteinander, um jeden Kanaleigenschaftswert an der Position des verstreuten Pilots, der in Bezug auf ein Symbol die Periode einer zweiten vorgegebenen Anzahl hat, zu erhalten.

3. Verfahren nach Anspruch 1 oder 2, wobei in dem Schritt (c) alle Unterkanaleigenschaftswerte auf die Vielzahl von Trägern, die während des Symbolintervalls der ersten vorgegebenen Anzahl empfangen wurden, angewendet werden.

4. Verfahren nach Anspruch 1, 2 oder 3, wobei in dem Schritt (b) die Kanaleigenschaftswerte an der Position des verstreuten Pilots mit der Periode der anschließenden zweiten vorgegebenen Anzahl durch eine vorgegebene Interpolation interpoliert werden und ein Interpolationskoeffizient ausgegeben wird, um die Eigenschaften des Unterkanals, durch den Daten zwischen den verstreuten Piloten übertragen werden, zu schätzen.

5. Verfahren nach Anspruch 4, wobei die Kanalverzerrung durch Multiplizieren der während des Symbolintervalls der ersten vorgegebenen Anzahl empfangenen Träger mit der Inversen des Interpolationskoeffizienten kompensiert wird.

6. Verfahren nach Anspruch 4, wobei die Interpolation eine unter konstanter Interpolation, linearer Interpolation und gefensterter FIR-Filterinterpolation ist.

7. Verfahren nach einem der Ansprüche 2 bis 6, wobei die vorgegebenen Musterdaten arithmetische Nullwerte sind.

8. Entzerrer zum Kompensieren von Kanalverzerrung einer Vielzahl von Trägern, die durch eine Vielzahl von empfangenen Unterkanälen unter Verwendung eines verstreuten Pilots mit einer Periode einer ersten vorgegebenen Anzahl von Symbolen übertragen werden, umfassend:

eine Schätzeinheit (106) zum Extrahieren von verstreuten Piloten aus der Vielzahl von empfangenen Trägern in Einheiten der ersten vorgegebenen Anzahl von Symbolen, um die Kanaleigenschaftswerte an den Positionen der extrahierten verstreuten Pilote zu schätzen,
eine Berechnungseinheit (112, 114, 116) zum Erhalten von Kanaleigenschaftswerten an der Position des verstreuten Pilots einer Periode einer zweiten vorgegebenen Anzahl von Unterkanälen durch Addieren der Kanaleigenschaftswerte jedes Unterkanals in Einheiten der ersten vorgegebenen Anzahl von Symbolen miteinander und zum Bereitstellen aller Unterkanaleigenschaftswerte durch Berechnen der Unterkanaleigenschaften der Daten zwischen den verstreuten Piloten unter Verwendung der Kanaleigenschaftswerte an der Position des verstreuten Pilots der Periode der zweiten vorgegebenen Anzahl von Unterkanälen, und
eine Kompensationseinheit (118) zum Kompensieren von Kanalverzerrung der Vielzahl von empfangenen Trägern unter Verwendung aller geschätzten Unterkanaleigenschaftswerte.

9. Entzerrer nach Anspruch 8, wobei in der Kompensationseinheit (118) alle Unterkanaleigenschaftswerte eines Symbols auf die Vielzahl von Trägern, die während eines Intervalls der ersten vorgegebenen Anzahl von Symbolen empfangen wurden, angewendet werden.

10. Entzerrer nach Anspruch 8 oder 9, wobei die Berechnungseinheit die Kanaleigenschaftswerte an der Position des verstreuten Pilots mit der Periode der anschließenden zweiten vorgegebenen Anzahl von Symbolen interpoliert und ein Interpolationskoeffizient ausgegeben wird, um die Eigenschaft des Unterkanals, durch den Daten zwischen den verstreuten Piloten übertragen werden, zu berechnen.

11. Entzerrer nach Anspruch 10, wobei die Kompensationseinheit (118) einen Multiplizierer zum Multiplizieren des empfangenen Trägers mit der Inversen des Interpolationskoeffizienten umfasst.

12. Entzerrer nach Anspruch 10. wobei die Interpolation eine unter konstanter Interpolation, linearer Interpolation und gefensterter FIR-Filterinterpolation ist.

13. Entzerrer nach Anspruch 12, wobei das gefensterte FIR-Filter ein Tiefpassfilter ist, dessen Abtastfrequenz die zweite vorgegebene Anzahl von Malen der Trägerfrequenz ist.

14. Entzerrer nach Anspruch 8, wobei die Berechnungseinheit (112, 114) einen arithmetischen "Nullwert" in andere Träger als die verstreuten Piloten mit den geschätzten Kanaleigenschaftswerten einsetzt und die Eigenschaftswerte jedes Unterkanals in Einheiten der ersten vorgegebenen Anzahl von Symbolen miteinander addiert.

**Revendications**

1. Procédé d'égalisation pour compenser une distorsion de canal d'une pluralité de porteuses transmises via une pluralité de sous-canaux en utilisant des ondes pilotes diffusées ayant une période d'un premier nombre prédéterminé de symboles, comportant les étapes consistant à :

(a) extraire (106) des ondes pilotes diffusées en unités de la première période de symboles prédéterminée d'une pluralité de porteuses reçues, ajouter une valeur de caractéristique de canal de chaque sous-canal dans la position d'onde pilote diffusée extraite dans le premier nombre prédéterminé de symboles, et obtenir des valeurs de caractéristique de canal dans des positions d'onde pilote diffusée ayant une période d'un second nombre prédéterminé,

(b) estimer (110) les caractéristiques d'un sous-canal à travers lequel des données entre des ondes pilotes diffusées sont transmises en utilisant les valeurs de caractéristique de canal dans la position d'onde pilote diffusée ayant la période du second nombre prédéterminé adjacent afin d'obtenir toutes les valeurs de caractéristique de sous-canal, et

(c) compenser (118) une distorsion de canal de la pluralité de porteuses reçues sur la base de toutes les valeurs de caractéristique de sous-canal.

2. Procédé selon la revendication 1, dans lequel l'étape (a) comporte les étapes consistant à :

(a1) extraire des ondes pilotes diffusées d'une pluralité de porteuses reçues en unités du premier nombre prédéterminé de symboles,

(a2) calculer chaque valeur de caractéristique de canal dans la position d'onde pilote diffusée extraite en utilisant les valeurs de coordonnées des ondes pilotes diffusées déjà révélées,

(a3) remplacer des porteuses autres que les ondes pilotes diffusées par des données de motif prédéterminé, et

(a4) ajouter les valeurs de caractéristique de chaque sous-canal les unes aux autres dans chaque unité du premier nombre prédéterminé de symboles afin d'obtenir chaque valeur de caractéristique de canal dans la position des ondes pilotes diffusées ayant la période d'un second nombre prédéterminé concernant un symbole.

3. Procédé selon la revendication 1 ou 2, dans lequel toutes les valeurs de caractéristique de sous-canal sont appliquées à la pluralité de porteuses reçues pendant l'intervalle de symboles du premier nombre prédéterminé, à l'étape (c).

4. Procédé selon la revendication 1, 2 ou 3, dans lequel les valeurs de caractéristique de canal dans la position des ondes pilotes diffusées ayant la période du second nombre prédéterminé adjacent sont interpolées par l'intermédiaire d'une interpolation prédéterminée et un coefficient interpolé est délivré en sortie, afin d'estimer les caractéristiques du sous-canal à travers lequel des données entre les ondes pilotes diffusées sont transmises, à l'étape (b).

5. Procédé selon la revendication 4, dans lequel la distorsion de canal est compensée en multipliant la porteuse reçue pendant l'intervalle de symboles du premier nombre prédéterminé par l'inverse du coefficient interpolé.

6. Procédé selon la revendication 4, dans lequel l'interpolation est l'une parmi une interpolation constante, une interpolation linéaire et une interpolation par filtrage FIR à fenêtre.

7. Procédé selon l'une quelconque des revendications 2 à 6, dans lequel les données de motif prédéterminé sont des zéros arithmétiques.

8. Egaliseur pour compenser une distorsion de canal d'une pluralité de porteuses transmises via une pluralité de sous-canaux reçus en utilisant une onde pilote diffusée ayant en période d'un premier nombre prédéterminé de symboles, comportant :

une unité d'estimation (106) pour extraire des ondes pilotes diffusées de la pluralité de porteuses reçues en unités du premier nombre prédéterminé de symboles afin d'estimer des valeurs de caractéristique de canal dans la position d'onde pilote diffusée extraite,

une unité de calcul (112, 114, 116) pour obtenir des valeurs de caractéristique de canal dans la position de l'onde pilote diffusée d'une période d'un second nombre prédéterminé de sous-canaux en ajoutant les valeurs de caractéristique de canal de chaque sous-canal les unes aux autres en unités du premier nombre prédéterminé de symboles et pour délivrer toutes les valeurs de caractéristique de sous-canal en calculant les caractéristiques de sous-canal des données entre les ondes pilotes diffusées en utilisant les valeurs de caractéristique de canal dans la position d'onde pilote diffusée de la période du second nombre prédéterminé de sous-canaux, et
une unité de compensation (118) pour compenser une distorsion de canal de la pluralité de porteuses reçues
en utilisant toutes les valeurs de caractéristique de sous-canal estimées.

9. Egaliseur selon la revendication 8, dans lequel toutes les valeurs de caractéristique de sous-canal d'un symbole
sont appliquées à la pluralité de porteuses reçues pendant un intervalle du premier nombre prédéterminé de symboles, dans l'unité de compensation (118).

10. Egaliseur selon la revendication 8 ou 9, dans lequel l'unité de calcul effectue une interpolation des valeurs de
caractéristique de canal dans la position de l'onde pilote diffusée ayant la période du second nombre prédéterminé
de symboles adjacent et un coefficient interpolé est délivré en sortie, afin de calculer la caractéristique du sous-canal
à travers lequel des données entre les ondes pilotes diffusées sont transmises.

11. Egaliseur selon la revendication 10, dans lequel l'unité de compensation (118) comporte un multiplicateur pour
multiplier la porteuse reçue par l'inverse du coefficient interpolé.

12. Egaliseur selon la revendication 10, dans lequel l'interpolation est l'une parmi une interpolation constante, une
interpolation linéaire, et une interpolation par filtrage FIR à fenêtre.

13. Egaliseur selon la revendication 12, dans lequel le filtre FIR à fenêtre est un filtre passe-bas dont la fréquence
d'échantillonnage est égale au second nombre prédéterminé de fois la fréquence porteuse.

14. Egaliseur selon la revendication 8, dans lequel l'unité de calcul (112, 114) insère un "zéro" arithmétique dans les
porteuses autres que les ondes pilotes diffusées ayant les valeurs de caractéristique de canal estimées et ajoute
les valeurs de caractéristique de chaque sous-canal les unes aux autres en unité du premier nombre prédéterminé
de symboles.

# FIG. 1

TPS CARRIERS AND CONTINUAL PILOTS BETWEEN $K_{min}$ AND $K_{max}$ ARE NOT INDICATED

● BOOSTED PILOT

○ DATA

EP 0 903 898 B1

# FIG. 2

$K_{min} = 0$

$K_{max} = 1704$ if 2K
$K_{max} = 6816$ if 8K

SYMBOLS 67
SYMBOLS 0
SYMBOLS 1
SYMBOLS 2
SYMBOLS 3

TPS CARRIERS AND CONTINUAL PILOTS BETWEEN $K_{min}$ AND $K_{max}$ ARE NOT INDICATED

● BOOSTED PILOT

○ DATA

EP 0 903 898 B1

# FIG. 3

# FIG. 4

EP 0 903 898 B1